# EUROPEAN PATENT SPECIFICATION

(11) **EP 2 253 162 B1**
(45) Date of publication and mention of the grant of the patent: **16.12.2015**
(21) Application number: 09702959.9
(22) Date of filing: 16.01.2009
(51) Int. Cl.: H04W 36/14, H04W 36/18, H04W 76/02, H04W 88/06

(54) **CLIENT-BASED MULTIMODE HANDOVER IN COMMUNICATION SYSTEMS**
MULTIMODUS-HANDOVER AUF CLIENT-BASIS IN KOMMUNIKATIONSSYSTEMEN
TRANSFERT MULTIMODE BASÉ SUR LE CLIENT DANS DES SYSTÈMES DE COMMUNICATION

(30) Priority: 16.01.2008 US 21569; 15.01.2009 US 354640
(43) Date of publication of application: 24.11.2010
(73) Proprietor: Seven Networks, LLC, Marshall TX 75672 (US)
(72) Inventor: SENGUPTA, Chaitali, Richardson TX 75082 (US); LEE, Yuan Kang, San Diego CA 92130 (US); MAKINENI, Naveen, Addison TX 75001 (US); SEN, Sudipta, Richardson TX 75082 (US); SRINIVASAN, Suresh, Dallas TX 75206 (US)
(74) Representative: Leach, James
(86) International application number: PCT/US2009/031291
(87) International publication number: WO 2009/092008

(56) References cited:
- WO-A-02/19736
- WO-A-2004/100452
- WO-A-2007/026267
- US-A1- 2003 193 910
- US-A1- 2005 159 153

## Description

### Background

Recently there has been a surge of communication devices in the marketplace that have multimode capabilities. These multimode communication devices are capable of communicating via dual radio connections with various communication networks that may be employing different communication protocols. For example, typical multimode communication devices are capable of communicating with various type of networks such as cellular networks (e.g. Global System for Mobile communication (GSM), General Packet Radio Service (GPRS), Code Division Multiple Access (CDMA), Third Generation (3G), etc) and wireless broadband (e.g. Wireless Fidelity (WiFi), Worldwide Interoperability for Microwave Access (WiMAX), Long Term Evolution (LTE), Femtocells, etc). Today a typical multimode communication device may communicate via one radio communication path to a cellular network employing a circuit-switched or packet-switched topology, and via the other radio communication path to a wireless broadband network employing a packet-switched network topology.

WO 02/19736 discloses a method for maintaining a radio link between subscribers of a radio link. At least one of said subscribers is a mobile subscriber (MT) who moves from his currently used radio network (FN1) pertaining to a technical standard of a first type, which is overlapped on his location by a second radio network (FN2) pertaining to a technical standard of a second type. By using the feature "identified call waiting", a second link is set up with the same subscriber or subscribers using at least the second radio network (FN2).

WO 2004/100452 discloses a method using WLAN resources in hotspots for voice and data connections and enables handover between WWAN and WLAN and vice versa. This allows two users in the hotspots to communicate with each other by making a voice over IP (VoIP) or video call, thus achieving cost savings for the end users and WWAN resources savings for the wireless operators.

WO 2007/026267 discloses a method and apparatus to be executed in a first UE (User Equipment) and applied to identification for handover from a current serving network to a target network, the method comprising the steps of: acquiring handover status information for a second UE communicating with it; and sending identity confirmation information to the second UE according to the handover status information so that the second UE can validate its identity, wherein the handover status information and the identity confirmation information are transmitted via different networks.

US 2005/159153 discloses a method and apparatus for providing a switching of voice calls between different wireless networks. In one example, a mobile communication device has a processor and one or more wireless transceivers coupled to the processor. The one or more wireless transceivers include a first transceiver portion operative in accordance with a first wireless network (e.g. a GSM/GPRS cellular network) and a second transceiver portion operative in accordance with a second wireless network (e.g. an 802.11 wireless network).

### Summary of the Invention

The present invention provides a communication system as set out in claim 1. Further aspects of the present invention are set out in the remaining claims.

### Brief Description of the Drawings

The drawing figures depict one or more implementations in accord with the present teachings, by way of example only, not by way of limitation. In the figures, like reference numerals refer to the same or similar elements.
FIG. 1 is a high-level network diagram of an exemplary environment in which a client-based multimode handover system may operate.
FIG. 2 is a network diagram of an exemplary environment in which the client-based multimode handover process may operate.
FIG. 3 is a network diagram of an exemplary environment in which the client-based multimode handover process may operate.
FIG. 4 is a network diagram of an exemplary environment in which the client-based multimode handover process may operate.
FIG. 5 is a network diagram of an exemplary environment in which the client-based multimode handover process may operate.
FIG. 6 is a network diagram of an exemplary environment in which the client-based multimode handover process may operate.
FIG. 7 is a network diagram of an exemplary environment in which the client-based multimode handover process may operate.
FIG. 8 is a network diagram of an exemplary environment in which the client-based multimode handover process may operate.
FIG. 9 is a network diagram of an exemplary environment in which the client-based multimode handover process may operate.
FIG. 10 is a network diagram of an exemplary environment in which the client-based multimode handover process may operate.
FIG. 11 is a data flow diagram of an exemplary embodiment of the client-based multimode handover process occurring between local device 100 and remote device 102.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

Today, a multimode communication device can separately make a call using either of the device's one or more radio connections to a network such as a cellular or wireless broadband network. However, because these cellular and wireless broadband networks are separately owned and do not operate in a coordinated fashion, the multimode communication device cannot maintain call continuity when the device attempts to switch a call from the cellular network connection to the wireless broadband network connection, or vice versa.

Currently, the resolution of this problem relies on network providers to enable a multimode communication device to switch a call from one network to another network. Presently, in order for a multimode communication device to maintain call continuity when switching from one network to another network, the two networks have to be converged. That is, the device's network provider has installed network equipment and accompanying network-based software that enable network convergence such that the networks appear to a multimode communication device as a single network.

Currently, as an example, network providers are converging their various networks using IMS (IP Multimedia Subsystem) as a standard. A network service provider who has implemented an IMS-converged network has the ability to allow a multimode communication device to use equipment within the network as an anchoring point to handover the user's call from one network to another while maintaining call continuity. Thus, an IMS-converged network is required to maintain call continuity white switching a call between the network provider's various networks.

However, there are many problems associated with relying on an IMS-converged network to maintain call continuity when using a multimode communication device. One shortcoming is that the users of the multimode communication devices have to rely on their network service providers to provide an IMS-converged network. A further shortcoming is that this service is not widely available today, as such an IMS-converged network is still under development.

To address these problems, the following description enables one skilled in the art to utilize a client-based multimode handover scheme. By using client-based multimode handover described herein, multimode handover is possible without requiring the provision of an IMS-converged network. Accordingly, multimode communication device users are free to subscribe to services offered by network providers that do not provide a converged network.

In general, two aspects are considered for the client-based handover process: The first is for the multimode communication device to have access, either wired or wireless, to two or more connections that allow the device to connect to various networks. The second is an anchoring point that does not require alterations to the network provider's networks and supports the handover of a call associated with the multimode communication device from one network to another network while maintaining call continuity.

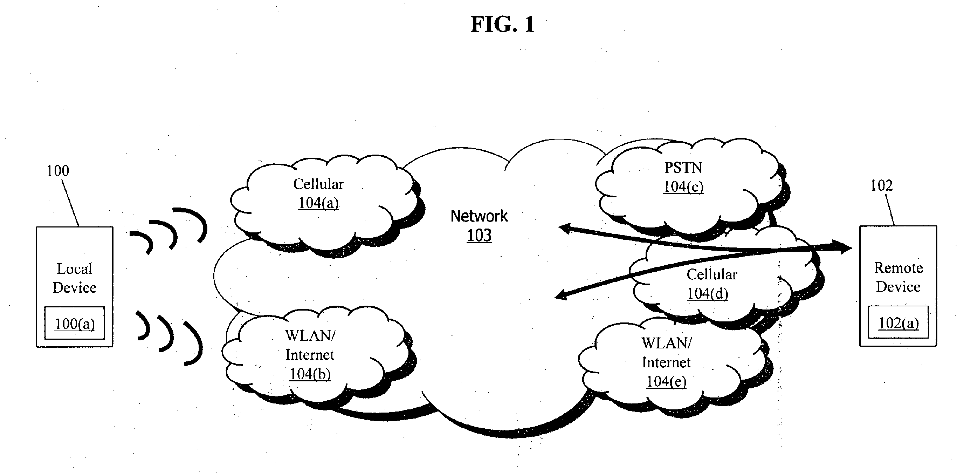

FIG. 1 is a high-level network diagram of an exemplary environment in which a client-based multimode handover system may operate. A local deice 100 is shown in communication with a remote device 102 over a network 103. Local device 100 represents a multimode communication device that will execute a handover from one radio network to another radio network while maintaining call continuity. Local device 100 can be, for example, a multimode communication device that is capable of making calls utilizing various networks (i.e. cellular or wireless broadband, circuit-switched or packet-switched). As shown, local device 100 may connect to a first network, for example, a cellular network 104(a) and a second network, for example, a Wireless Local Area Network (WLAN) 104(b) that is coupled to the Internet. Although local device 100 is shown in FIG. 1 as being connected to cellular network 104(a) and WLAN 104(b), local device 100 can be connected to any communication network based on any communication protocol. How local device 100 gets access to any network including, but not limited to cellular network 104a and WLAN/ 104b, can be either directly (wired or wireless) or via a short-distance-wireless (SDW) technology such as Bluetooth.

It should be noted that although local device 100 is described above as simply a multimode communication device, local device 100 can be any communication device as long as local device 100 has at least two separate means for connecting to various networks. The at least two connections to the various networks can be either wired or wireless (e.g., radio) or one of each. Furthermore, the connections to the networks can be accessible either directly or indirectly (e.g., through an intermediate device) from local device 100.

As an example, local device 100 can be any number of devices including, but not limited to cellular telephones, smartphones, and personal digital assistants having multiple radio transceivers allowing access to multiple networks such as GSM, 3G, EDGE (Enhanced Data rates for Global Evolution), and Internet networks. Additionally, for example; local device 100 can be a computer such as a desktop, laptop, and/or netbook having access to various networks through multiple wired or wireless connections. The examples identified above are not considered an exhaustive listing, but instead is presented to demonstrate that any device capable of accessing various networks via wired or wireless connections can implement the client-based multimode handover method described herein.

Local device 100 may also be a combination of two or more devices that together provide the end user multiple wired or wireless connections to various networks. For example, local device 100 may be a combination of a voice over Internet Protocol (VoIP) software module, such as SKYPE, residing on a computer having access to the Internet to allow VoIP calls and a GSM phone providing access to a GSM network. The GSM phone and the computer running the VoIP software may be connected to one another via a cellular headset. Thus, the combination of the computer with VoIP and the GSM phone may operate as local device 100 because the combination allows more than one connection to various networks.

Similarly, local device 100 may include a single-mode device such as a personal digital assistant (PDA). The PDA may have WiFi capability that enables the PDA to access a wireless Internet connection. Additionally, the PDA may have Bluetooth connectivity that enables the PDA to connect to another Bluetooth-enabled device such as a cellular device. Accordingly, the PDA has access to two separate network connections, namely, one connection providing access to the Internet and the other connection providing access to the cellular network. Thus, a single-mode device such as a PDA may operate as local device 100.

Accordingly, local device 100 may comprise any of the following devices such as a soft phone (e.g., VoIP software module) on a personal computer, cell phone, session initiated protocol (SIP) phone, VoIP phone, Bluetooth device enabled to communicate with a phone, personal digital assistant, WiFi-enabled phone, and a phone operable on a public switched telephone network (PSTN). As previously mentioned, the above is not an exhaustive listing, but instead is presented to demonstrate that any communication device capable of accessing various networks via more than one connection may operate as local device 100 when implemented according to the teachings herein.

Additionally shown in FIG. 1 is a remote device 102. Remote device 102 represents a second communication device in communication with local device 100. The description and examples set forth above associated with local device 100 are equally applicable to remote device 102. However, remote device 102 can be a single-mode or multimode communication device with the ability to communicate with a circuit-switched, packet-switched, cellular, wireless broadband, wireless, or wire-line network. As shown in FIG. 1, remote device 102 has access to cellular network 104(d). However, the remote device may be a different type of device, having instead access to a PSTN 104(c) or a WLAN/IP network 104(e).

Although cellular network 104(a) and cellular network 104(d) are shown in FIG. 1 as two separate cellular networks, it is within the scope of this disclosure that cellular networks 104(a) and 104(d) are the same network. Likewise, even though WLAN/IP 104(b) and WLAN/IP 104(e) are shown as separate networks, it is within the scope of this disclosure that these two networks are the same network. Accordingly, local device 100 and remote device 102 may be connected via the same or different network service providers and/or networks.

Details of the client-based multimode handover process is described below. Local device 100, includes a handover engine module 100(a) to perform client-based multimode handover. Handover engine module 100(a) is responsible for initiating the handover decision and is implemented by a software and/or hardware module residing in local device 100.

Remote device 102 includes a handover anchor module 102(a) that enables remote device 102 in combination with its network provider to act as an anchoring point to allow local device 100 to switch from a connection to a first network to a connection to a second network while maintaining communication with remote device 102. Accordingly, handover anchor module 102 utilizes the network servicing remote device 102 as a means to enable client-based multimode handovers.

It should be noted, that the client-based multimode handover process does not require that the network provider of either local device 100 and/or remote device 102 to explicitly support client-based multimode handovers. In that regard, no hardware and/or software modules need to be implemented by the network provider servicing either local device 100 or remote device 102 in order for the respective network providers to support client-based multimode handovers. Instead, the client-based handover process described herein utilizes the existing network providers' topologies in combination with handover engine module 100(a) of local device 100 and handover anchor module 102(a) of remote device 102 to perform client-based multimode handovers. Thus, the client-based multimode handover is performed independent of any specific network topology and transparent to the network provider servicing local device 100 and remote device 102, respectively.

Similar to handover engine module 100(a), handover anchor module 102(a) is implemented by a software and/or hardware module residing in remote device 102. The implementation of the handover engine and anchor module may be based on any embedded software operating system or on any high-level operating system that may be running on local device 100 and remote device 102. For example, the embedded software operating system and/or high-level operating system may include, but not limited to WINDOWS MOBILE, SYMBIAN, PALM OS, LINUX, APPLE OS, and GOOGLE OS.

As an example with respect to FIG. 1, local device 100 makes a first call to remote device 102 over cellular network 104(a). It should be noted that the term "call" is intended to be broadly construed to include, for example, voice, email, data, video, messaging, file transfer, and web sessions. Utilizing client-based multimode handover, when local device 100 decides to switch the call from a cellular network 104(a) connection to a WLAN/Internet network 104(b) connection, handover engine module 100(a) of local device 100 makes a second call to remote device 102 via WLAN/internet network 104(b) connection. Using a call waiting service capability of remote device 102, for example, handover anchor module 102(a) within remote device 102 recognizes that local device 100 is calling via another network. Remote device 102 under the control of its handover anchor module 102(a) then switches to the second call and disconnects the first call, effectively completing the client-based multimode handover process. In effect, local device 100 "anchors" the first and second calls on remote device 102 and its communication network or service provider.

In the scenario described above and hereinafter, either local device 100 or remote device 102 may originate the first call, and local or remote device may originate the second call for the purposes of the client-based multimode handover process. It is contemplated herein that both local device 100 and remote device 102 may include both handover engine and anchor modules so that either device may decide to perform a client-based multimode handover while the other device and its associated network provider act as the anchor. It is further contemplated that during the course of a "call" that more than one client-based multimode handover process are performed using either device and its associated network provider as the anchoring point as needed.

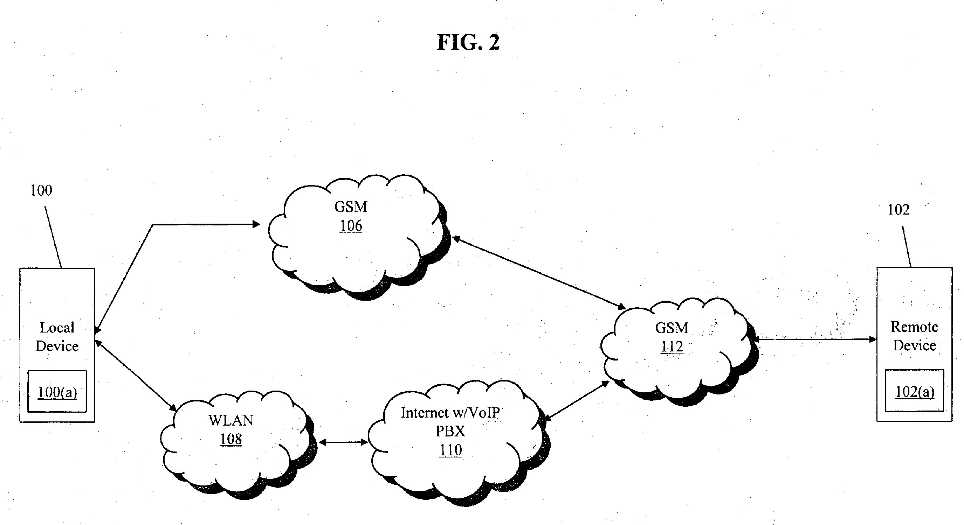

FIGS. 2-10 provide additional examples of network topologies in which client-based multimode handover process may be implemented. For the sake of brevity and clarity, description of elements identified by like reference numerals are not repeated.

FIG. 2 is a network diagram of an exemplary environment in which the client-based multimode handover process may operate. In FIG. 2, local device 100 is a GSM phone having multiple radio transceivers and is able to connect to multiple networks such as GSM network 106 and WLAN 108 connected to Internet 110 having a VoIP Private Branch Exchange (VoIP PBX). The VoIP PBX enables local device 100 to make a call to remote device 102 utilizing VoIP via WLAN 108. As shown in FIG. 2, remote device 102 includes a GSM phone, but is only a single-mode communication device. As stated above, remote device 102 may be a single-mode or multimode communication device. Remote device 102 communicates with local device 100 via remote device's network/service provider, which operates a second GSM network 112. As described above, local device 100 includes a handover engine module 100(a) and remote device 102 includes a handover anchor module 102(a). Thus, employing the client-based multimode handover process, local device 100 utilizes the combination of remote device 102 and its GSM network 112 as an anchor to handover the call from GSM network 106 to WLAN 108/Internet 110, or vice versa, in order to maintain call continuity.

Although, GSM network 106 and GSM network 112 are shown in FIG. 2 as two separate GSM networks, it is within the scope of this disclosure that these two GSM networks are the same network. Accordingly, local device 100 and remote device 102 can be connected to the same GSM network or to two separate GSM networks when utilizing the client-based multimode handover process.

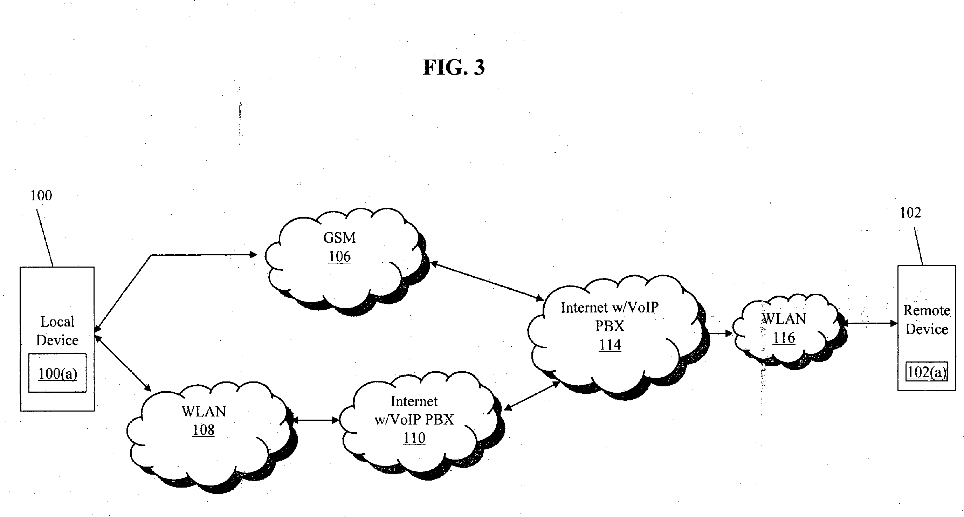

FIG. 3 is a network diagram of an exemplary environment in which the client-based multimode handover process may operate. In FIG. 3, remote device 102 includes a VoIP phone such as a session initiated protocol (SIP) phone. Remote device 102 and local device 100 communicate via a WLAN 116 that is connected to Internet 114 having a VoIP PBX. As described above, local device 100 includes a handover engine module 100(a) and remote device 102 includes a handover anchor module 102(a). Thus, employing the client-based multimode handover process, local device 100 utilizes the combination of remote device 102 and WLAN 116/Internet 114 as an anchor to handover a call from GSM network 106 to WLAN 108/Internet 110, or vice versa, in order to maintain call continuity.

It should be noted that although Internet 110 and Internet 114 are shown in FIG. 3 as two separate Internet networks, it is within the scope of this disclosure that these two Internet networks are the same Internet network.

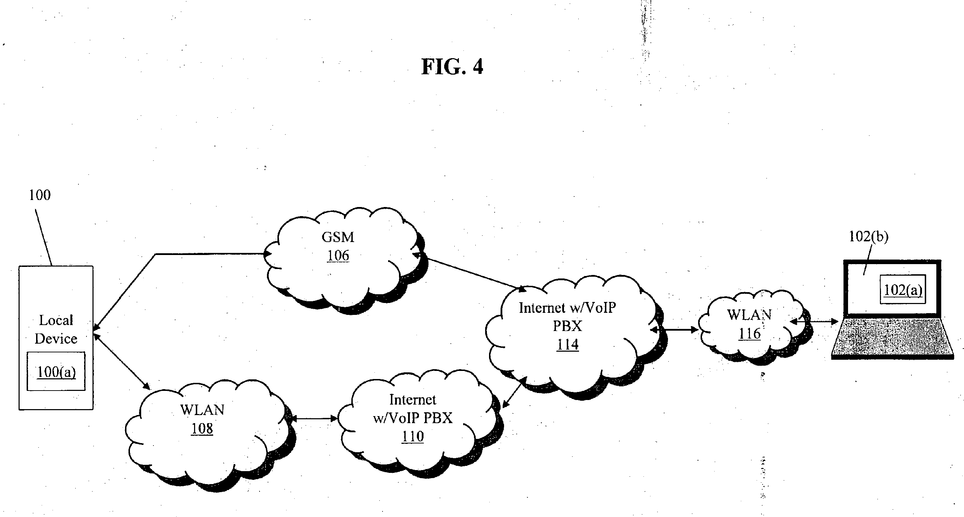

FIG. 4 is a network diagram of an exemplary environment in which the client-based multimode handover process may operate. FIG. 4 is similar to FIG. 3 except that remote device is a computer 102(b) such as a laptop, desktop, or netbook. Remote device 102(b) may be a multimode computer with VoIP capabilities harnessed through multiple network cards (e.g., 802.11 WLAN card, wired Ethernet card, and 3G interface). As described above, local device 100 includes a handover engine module 100(a) and remote device (e.g., computer 102(b)) includes a handover anchor module 102(a). Thus, employing the client-based multimode handover process, local device 100 utilizes the combination of remote device 102(b) and WLAN 116/Internet 114 as an anchor to handover a call from GSM network 106 to WLAN 108/Internet 110, or vice versa, in order to maintain call continuity.

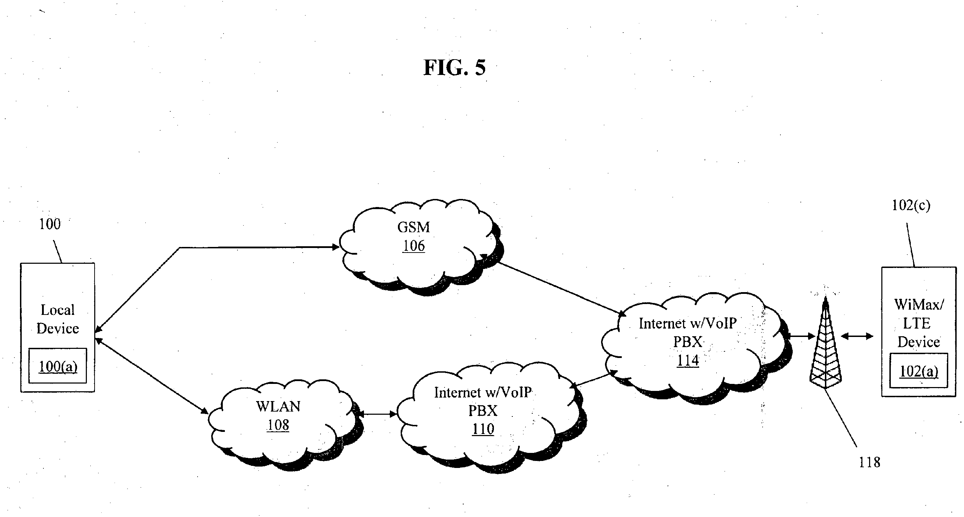

FIG. 5 is a network diagram of an exemplary environment in which the client-based multimode handover process may operate. In FIG. 5, remote device 102(c) is a Worldwide Interoperability for Microwave Access (WiMAX) or Long Term Evolution (LTE) capable device. Remote device 102(c) is coupled to a communication tower 118 which is coupled to Internet network 114. As described above, local device 100 includes a handover engine module 100(a) and remote device (e.g., WiMAX/LTE device 102(c)) includes a handover anchor module 102(a). Employing the client-based multimode handover process, local device 100 utilizes the combination of remote device 102(c) and communication tower 118/Internet 114 as an anchor to handover a call from GSM network 106 to WLAN 108/Internet 110, or vice versa, in order to maintain call continuity. It should be noted that remote device 102(c) in FIG. 5 can also be a multimode device having VoIP and/or GSM capabilities.

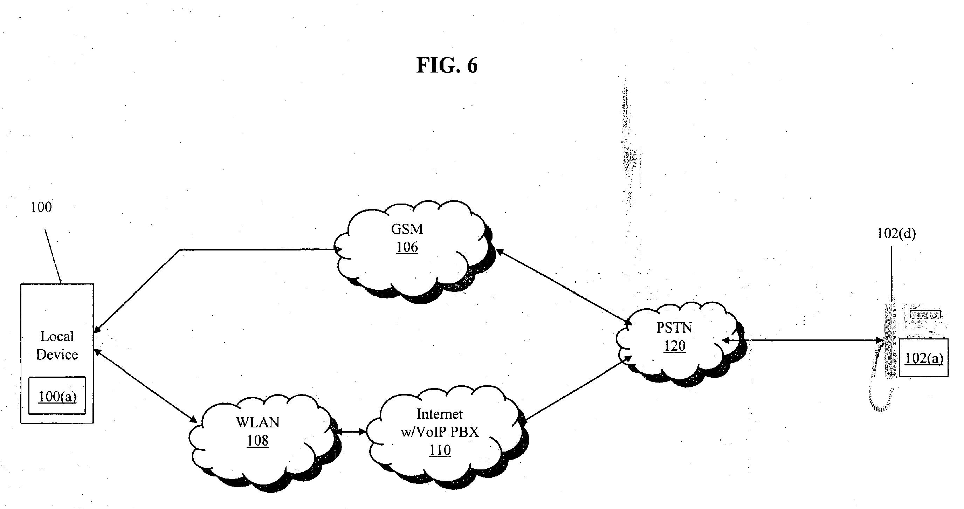

FIG. 6 is a network diagram of an exemplary environment in which the client-based multimode handover process may operate. In FIG. 6, remote device 102(d) includes a standard wired telephone connected to PSTN 120. This design can also be implemented with remote device 102(d) being a VoIP based phone with VoIP capabilities. As described above, local device 100 includes a handover engine module 100(a) and remote device (e.g., standard wired telephone 102(d)) includes a handover anchor module 102(a). Thus, employing the client-based multimode handover process, local device 100 utilizes the combination of remote device 102(d) and PSTN 120 as an anchor to handover a call from GSM network 106 to WLAN 108/Internet 110, or vice versa, in order to maintain call continuity.

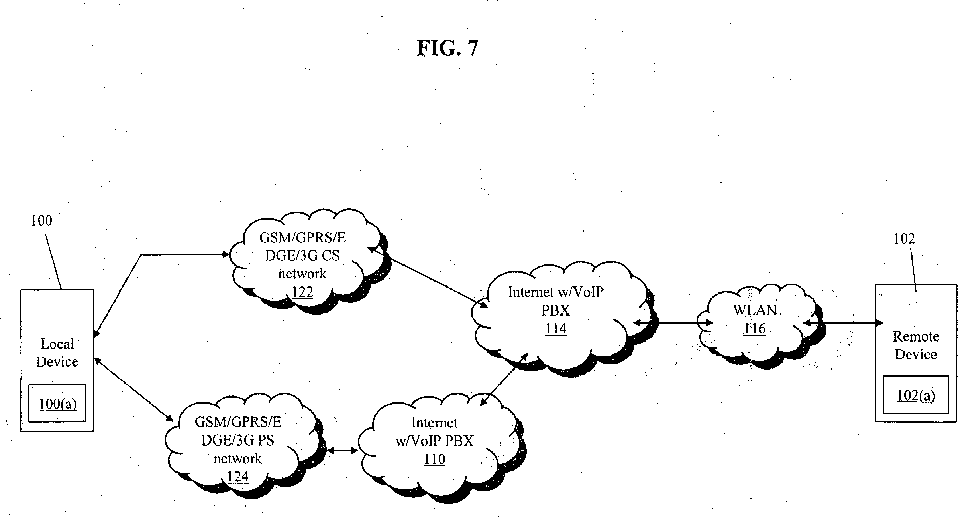

FIG. 7 is a network diagram of an exemplary environment in which the client-based multimode handover process may operate. In FIG. 7, local device 100 has multiple radio transceivers and is able to connect to multiple networks, namely, a GSM/GPRS/EDGE/3G Circuit Switch Network 122 and a GSM/GPRS/EDGE/3G Packet Switch Network 124. Connecting via these networks enables local device 100 to make a call to remote device 102 via either the circuit-switched or packet-switched network. Remote device 102 in FIG. 7 can be any exemplary remote device discussed above. As described above, local device 100 includes a handover engine module 100(a) and remote device 102 includes a handover anchor module 102(a). Thus, employing the client-based multimode handover process, local device 100 utilizes the combination of remote device 102 and WLAN 116/Internet 114 as an anchor to handover a call from GSM/GPRS/EDGE/3G Circuit Switch Network 122 to GSM/GPRS/EDGE/3G Packet Switch Network 124, or vice versa, in order to maintain call continuity.

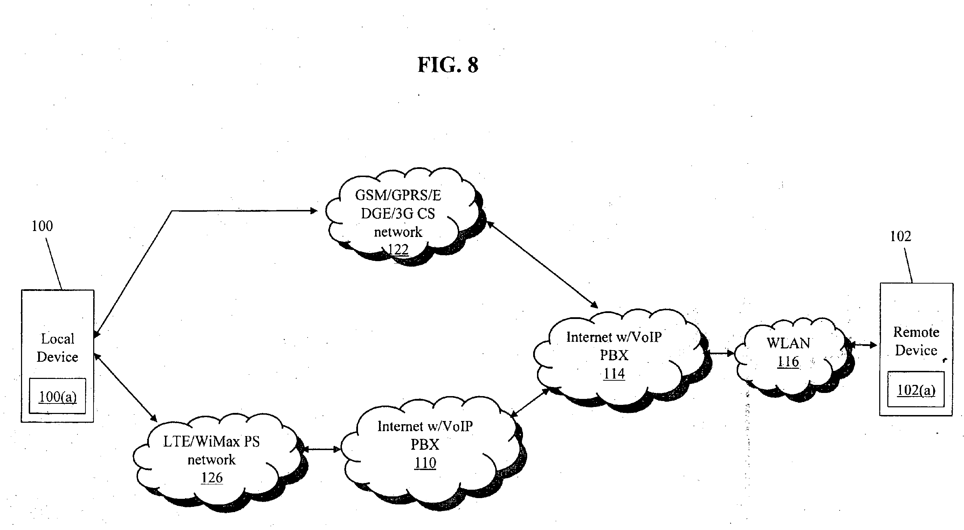

FIG. 8 is a network diagram of an exemplary environment in which the client-based multimode handover process may operate. FIG. 8 is similar to FIG. 7 except GSM/GPRS/EDGE/3G Packet Switch Network 124 has been replaced by a LTE or WiMax Packet Switch Network 126. Again, local device 100 has the capability to connect to different circuit-switched and packet-switched networks. As described above, local device 100 includes a handover engine module 100(a) and remote device 102 includes a handover anchor module 102(a). Employing the client-based multimode handover process, local device 100 utilizes the combination of remote device 102 and WLAN 116/Internet 114 as an anchor to handover a call from LTE or WiMax Packet Switch Network 126 to GSM/GPRS/EDGE/3G Circuit Switch Network 122, or vice versa, in order to maintain call continuity.

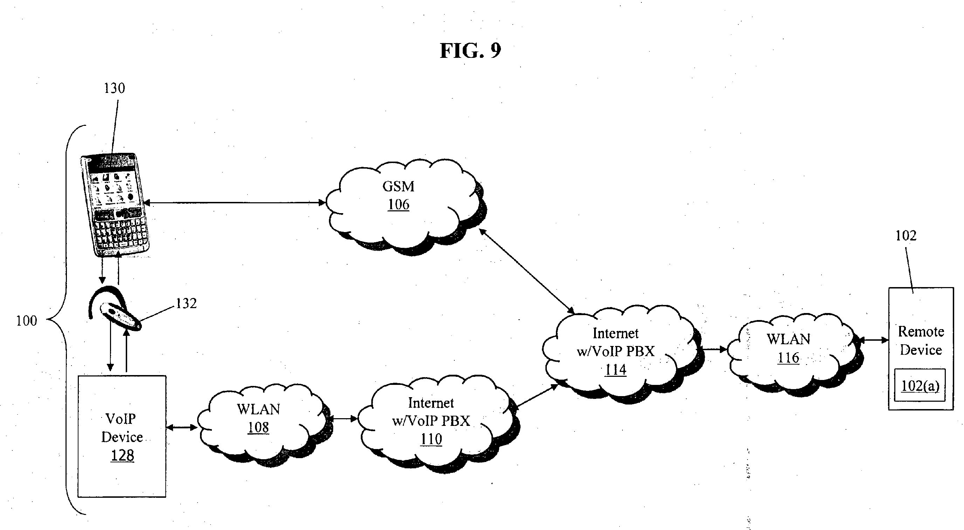

FIG. 9 is a network diagram of an exemplary environment in which the client-based multimode handover process may operate. In FIG. 9, local device 100 includes a combination of a VoIP devices and a GSM capable device. VoIP device 128 may be a VoIP program executing on a computer, for example. GSM capable device 130 may be a residential wired phone and/or cellular phone. The communication between the parts of local device 100 may be via a Bluetooth device 132, which maintains a seamless connection between VoIP device 128 and GSM capable device 130. As described above, local device 100 includes a handover engine module 100(a) and remote device 102 includes a handover anchor module 102(a). Thus, employing the client-based multimode handover process, local device 100, as a combination of multiple devices, utilizes the combination of remote device 102 and WLAN 116/Internet 114 as an anchor to handover a call from GSM network 106 to WLAN 108/Internet 110, or vice versa, in order to maintain call continuity.

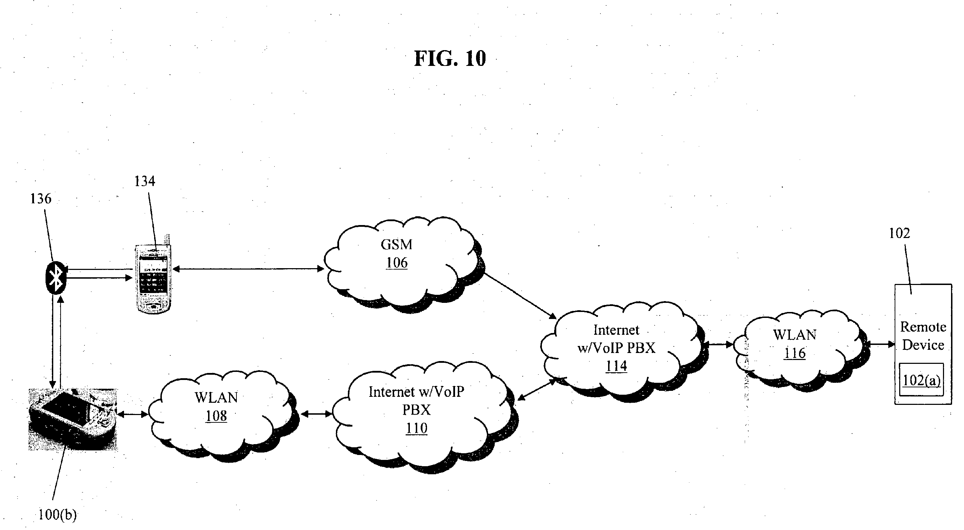

FIG. 10 is a network diagram of an exemplary environment in which the client-based multimode handover process may operate. In FIG. 10, local device 100 includes a single-mode communication device such as PDA 100(b) with WiFi capability that enables PDA 100(b) to connect to Internet 110 via WLAN 108. However, in this scenario PDA 100(b) has the additional ability to connect to cellular device 134 via a Bluetooth connection 136. Thus, via Bluetooth connection 136, PDA 100(b) has access to GSM network 106. As described above, local device 100 includes a handover engine module 100(a) and remote device 102 includes a handover anchor module 102(a). Therefore, even though PDA 100(b) is a single-mode communication device, employing the client-based multimode handover process, PDA 100(b) utilizes the combination of remote device 102 and WLAN 116/Internet 114 as an anchor to handover a call from GSM network 106 to WLAN 108/Internet 110, or vice versa, in order to maintain call continuity.

Alternatively, PDA 100(b) may have access to two different networks via only Bluetooth connection 136 to cellular device 134. For example, cellular device 134 can be a multimode communication device that has access to both a circuit-switched and packet-switched network. Therefore, connecting PDA 100(b) via Bluetooth connection 136 to cellular device 134 indirectly provides PDA 100(b) the access to both a circuit-switched and packet-switched network. Therefore, even though PDA 100(b) is a single-mode communication device, employing client-based multimode handover process, PDA 100(b) utilizes the combination of remote device 102 and WLAN 116/Internet 114 as an anchor to handover a call from a circuit-switched network to a packet-switched network via cellular device 134, or vice versa, in order to maintain call continuity.

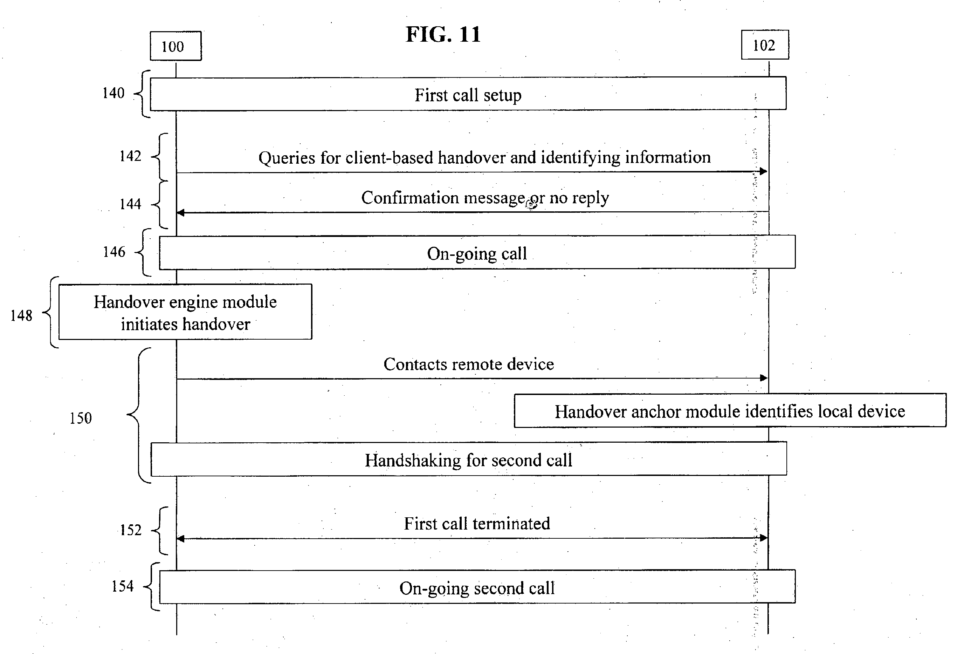

FIG. 11 is a data flow diagram of an exemplary embodiment of the client-based multimode handover process occurring between local device 100 and remote device 102. At step 140, a first call is established between local device 100 and remote device 102. Either device 100 or device 102 may originate the call. The call established during step 140 occurs across a first network connection accessible by local device 100. As discussed previously, a call may include, but is not limited to voice, email, data, video, messaging, file transfer, and web sessions between local device 100 and remote device 102.

During the handshaking process that occurs while the call is being setup, local device 100 at step 142, sends a query to remote device 102 inquiring whether remote device 102 supports client-based multimode handover. The query involves utilizing commonly known communication protocols that enable local device 100 to send data to remote device 102. Communication protocols that enable local device 100 to send data such as a message include, but are not limited to short message service (SMS), Internet protocol (IP), Internet protocol version 6 (IPv6), Internet protocol security (IPSec), H.323 recommendation from the ITU Telecommunication Standardization Sector (ITU-T), multi-protocol label switching (MPLS), transmission control protocol/Internet protocol (TCP/IP), user datagram protocol (UDP), media gateway control protocol (MGCP), real time transport protocol (RTP), instant messaging (IM), or session initiation protocol (SIP). Thus, it is contemplated that any communication protocol that allows the transmission of data, such as for messaging purposes, may be used for any handshaking activities that may occur between local device 100 and remote device 102.

Additionally, at step 142 local device 100 sends the identifying information of connectivity for its radio transceivers, network providers, and/or service providers to remote device 102. Furthermore, the identifying information may include, but is not limited to caller identification, information identifying local device's first communication network connection, and information identifying local device's second communication network connection. Local device 100 sends this identifying information, so that remote device 102 can recognize a second call from local device 100 during the handover process. Furthermore, during this step local device 100 alerts remote device 102 which of the identifying information represents the current network connection being used for the first call.

At step 144, remote device 102 either (i) replies with a message confirming that remote device 102 supports client-based multimode handover or (ii) does not reply to the query from local device 100. In the event, that remote device 102 does not reply to the query, local device 100 interprets the non-reply as an indication that remote device 102 is not capable of supporting client-based multimode handover.

At step 146, handshaking for the first call is completed between local device 100 and remote device 102, and the first call is ongoing. At some point, handover engine module 100(a) of local device 100 may decide to handover the call from its first network connection to it second network connection; At step 148, the client-based handover process is initiated by handover engine module 100(a) residing within local device 100.

The decision of the handover made by local device 100 may be based on any number of factors. For example, local device 100 may decide to perform the handover because the signal strength of the second network connection is higher than the current network connection. Likewise, local device 100 may decide to switch to the second network connection when the quality of communication across the first network has degraded. Additionally, local device 100 may base its handover decision on the comparative link statistics of the two networks. Furthermore, handover engine module 100(a) may base its decision to initiate a handover based on the comparative costs of the two network connections, higher data transfer rates across one of the network connections; applications running on local device 100 and/or remote device 102, and/or the remaining battery power of local device 100 and/or remote device 102.

Although local device 100 is responsible for the handover decision, its decision may further be influenced by the preferences of remote device 102. For example, during the initial handshake occurring at step 144, remote device 102 may send its connection preferences to local device 100. Preferences transmitted by remote device 102 may include, but not limited to that it has lower costs associated with certain types of networks or that it receives incoming calls for free. The degree to which local device 100 considers remote device's preferences may be determined by the handover decision settings programmed within handover engine module 100(a).

Additional factors that may be consider by handover engine module 100(a) for determining whether to initiate a handover include considering the time of day, day of week, subscription plan of local device 100, subscription plan of remote device 102, cost associated with the first communication network in comparison to cost associated with the second communication network for local device 100, cost associated with the first communication network in comparison to cost associated with the second communication network for remote device 102, and user defined preferences from either local device 100 and/or remote device 102 for communication connectivity.

The preferences and factors discussed above are intended to be examples of criteria that are considered by handover engine module 100(a) of local device 100. Furthermore, additional handover criteria can be found in related co-pending U.S. Patent Application No. 11/929,231, filed October 30, 2007, entitled "System, Method, and Computer-Readable Medium for User Equipment Decision-Making Criteria for Connectivity and Handover," and to U.S. Patent Application No. 11/929,066, filed October 30, 2007, entitled "System, Method, and Computer-Readable Medium for Selecting a Network for Connectivity and Handover Based on Application Requirements".

At step 150, local device 100 contacts remote device 102 requesting a handover, via its second network connection, different from the first network connection currently in use for the first call. Specifically, local device 100 contacts remote device 102 using two alternative options described below.

The first option involves local device 100 calling remote device 102 via the second network in order to establish the second call. Under the first option, handover anchor module 102(a) residing in remote device 102 determines the identity of the second incoming call as being from local device 100 by either using caller identification or via an explicit message sent by local device 100 accompanying the call setup process of the second call. All communication protocols discussed above may be used to send the explicit message. Specifically, communication protocols that enable local device 100 to send data such as a message to remote device 102 include, but are not limited to SMS, IP, IPv6, IPSec, H.323 recommendation from the ITU Telecommunication Standardization Sector, MPLS, TCP/IP, UDP, MGCP, RTP, IM, SIP, and caller-ID. Thus, it is contemplated that any communication protocol that allows the transmission of data, such as for messaging purposes, may be used for any handshaking activities that may occur between local device 100 and remote device 102.

Handover anchor module 102(a) of remote device 102 uses the data supplied by local device 100 to determine that the second call is coming from local device 100 and implements the client-based multimode handover process. In response to remote device 102 recognizing that the second call is from local device 100, handover anchor module 102(a) of remote device 102 may be programmed to automatically answer the second call or require user input by prompting the user to either accept or decline the second call.

The second options involves local device 100 establishing the second call with remote device 102 by first sending remote device 102 a message in step 150. In this scenario, local device 100 sends remote device 102 a message with the identifying information of its second network connection. Because local device 100 previously sent the second network identifying information to remote device 102 in step 142, handover anchor module 102(a) residing of remote device 102 recognizes that the message is from local device 100. Subsequently, handover anchor module 102(a) implements the client-based multimode handover process by calling local device 100 on its second network connection to establish the second call. It should be noted that handover anchor module 102(a) may be programmed to automatically call local device 102 upon receiving local device's message requesting a handover, or remote device 102 may be setup to require user input by prompting the user to approve the second call.

While the handshaking with respect to the second call occurs, the call flow as seen in FIG. 11 proceeds to step 152. In step 152, the first call between local device 100 and remote device 102 is terminated. The termination of the first call can be initiated by either local device 100 or remote device 102. However, local device 100 and remote device 102 have to decide whether to establish the second call before terminating the first call or terminate the first call before establishing the second call. By establish the second call before terminating the first call, local device 100 and remote device 102 can maintain call continuity during the client-based handover process.

In order to establish the second call before terminating the first call, local device 100 can take advantage of traditional calling features associated with remote device 102 that enable remote device to be able to handle multiple calls and/or calling devices simultaneously. For example, remote device 102 can utilize call waiting, multiparty calling, and conference calling capabilities to enable remote device 102 to handle multiple simultaneous calls and/or calling devices.

Specifically with respect to conference calling, remote device 102 may be able to utilize traditional PSTN conferencing or VoIP conference calling service. In that regard, remote device 102 may implement the following procedures to handle multiple simultaneous calls and/or calling devices. First, remote device 102 creates a conference call and adds, for example, the first call with local device 100 to the conference. Secondly, remote device 102 can add additional calls it receives to the established conference call including the second call established with local device 100. Third, remote device 102 has the ability as the conference call leader to remove the first call with local device 100 from the conference call, thereby leaving the second call with local device 100 as the only participant in the conference call. Finally, remote device 102 can terminate the conference call when all calls with local device 100 are terminated. Therefore, as an example, remote device 102 can take advantage of already established calling features, such as conference calling, in order to handle multiple simultaneous calls and/or calling devices.

Regardless of whether local device 100 or remote device 102 initiates termination, the first call is terminated during step 152. Upon termination of the first call, the client-based handover process is completed between local device 100 and remote device 102. Therefore, local device 100 has used the combination of remote device 102 and its associated network provider as a call anchoring point to switch the first call made originally on local device's first network connection onto local device's second network connection trough the use of the second call.

Finally, the call flow proceeds to step 154 where local device 100 and remote device 102 are in communication with one another through the established second call. The established second call utilizes the second network connection accessible to local device 100. Thus, through call flow process outlined in FIG. 11 local device 100 is capable of switching calls across its network connections by using the combination of remote device 102 and its network provider as an anchoring point, while maintaining call continuity with remote device 102, and without relying on the network provider having implemented an IMS-converged network.

It should be noted that the call flow disclosed in FIG. 11 is not intended to be limiting or exhaustive in the possible variations that would occur to one skilled in the art. Furthermore, the call flow is not limited to a single pass through the various steps outlined above. Instead, parts or all of the call flow may be iterative. In fact, local device 100 can use the above call flow to switch the second call back to local device's first network connection or even to a third network connection that is accessible by local device 100. In other words, there is no implied or inherent limitation in the above described call flow process for client-based multimode handover in the number of occurrences a call can be switched from one network to another network or on the number of networks that local device 100 can use to switch calls.

The foregoing has described what are considered to be the best mode and/or other examples, it is understood that various modifications may be made therein and that the subject matter disclosed herein may be implemented in various forms and examples, and that the teachings may be applied in numerous applications, only some of which have been described herein.

## Claims

1. A communication system comprising:
a first communication device (100) being in communication with a second communication device (102) via a communication connectivity to a first communication network;
the first communication device (100) having a first handover module (100(a)) operable to handover communication connectivity from the first communication network to a second communication network; and
the second communication device (102) having a second handover module (102(a)) cooperatively operable with the first handover module (100(a)) to maintain communication between the second communication device (102) and the first communication device (100) while the first handover module (100(a)) operates to handover communication connectivity from the first communication network to the second communication network
**characterized in that** the first communication device (100) is configured to, prior to initiating the handover of the communication connectivity from the first communication network to the second communication network, send identifying information of connectivity for its radio transceiver, network providers and/or service providers to the second communication device (102), the identifying information sent to the second communication device (102) including information identifying the first communication device's second communication network connection;
wherein the first handover module (100(a)) is configured to initiate the handover of the communication connectivity from the first communication network to the second communication network by sending a message to the second handover module (102(a)) along with information identifying the first communication device's second communication network connection, wherein the second handover module (102(a)) is configured to recognize that the message is from the first communication device (100) based on the previously sent information identifying the first communication device's second communication network connection and implement the handover by calling the first communication device (100) via the second communication network.

2. The communication system of claim 1, wherein the first communication device (100) is selected from a group consisting at least one of a soft phone on a personal computer, cell phone, session initiated protocol (SIP) phone, a voice over Internet protocol (VoIP) phone, Bluetooth device enabled to communicate with a phone, personal digital assistant, WiFi enabled phone device, and a phone operable with a public switched telephone network (PSTN).

3. The communication system of claim 1, wherein the second communication device (102) is selected from a group consisting at least one of a soft phone on a personal computer, cell phone, session initiation protocol (SIP) phone, a voice over Internet protocol (VoIP) phone, Bluetooth device enabled to communicate with a phone, personal digital assistant, WiFi enabled phone device, and a traditional public switched telephone network (PSTN).

4. The communication system of claim 1, wherein the first and second communication network is each selected from a group of networks consisting of WiFi, Internet Protocol (IP), code division multiple access (CDMA), global system for mobile communications (GSM), voice over Internet protocol (VoIP), public switching telephone network (PSTN), worldwide interoperability for microwave access (WiMAX), long term evolution (LTE), third generation (3G), GPRS operating over EDGE (EGPRS), and any other packet-switched and/or circuit-switched network.

5. The communication system of claim 1, wherein the communication connectivity to the first communication network is wireless.

6. The communication system of claim 1, wherein the second handover module (102(a)) is programmed to automatically call the first communication device (100) upon receiving the message initiating the handover from the first communication device (100).

7. The communication system of claim 1, wherein the message is transmitted via a protocol selected from a group consisting of short message service (SMS), instant messaging (EVI), and session initiation protocol (SIP).

8. The communication system of claim 1, wherein the message comprises identity information of the first communication device (100) used by the second handover module (102(a)) to verify the first communication device (100) and enable the handover of communication connectivity from the first communication network to the second communication network.

9. The communication system of claim 8, wherein the identity information is selected from a group consisting of caller identification, information identifying the first communication network connection, and information identifying the second communication network connection.

10. The communication system of claim 1, wherein the first handover module (100(a)) comprises a decision logic to handover communication connectivity from the first communication network to the second communication network based on time of day or day of week.

11. The communication system of claim 1, wherein the first handover module (100(a)) comprises a decision logic to handover communication connectivity from the first communication network to the second communication network based on a subscription plan of the first communication device (100) or a subscription plan of the second communication device (102).

12. The communication system of claim 1, wherein the first handover module (100(a)) comprises a decision logic to handover communication connectivity from the first communication network to the second communication network based on cost associated with the first communication network in comparison to cost associated with the second communication network for the first communication device (100) or cost associated with the first communication network in comparison to cost associated with the second communication network for the second communication device (102).

13. The communication system of claim 1, wherein the first handover module (100(a)) comprises a decision logic to handover communication connectivity from the first communication network to the second communication network based on user preferences for communication connectivity.

14. The communication system of claim 1, wherein the first handover module (100(a)) comprises a decision logic to handover communication connectivity from the first communication network to the second communication network based on relative signal strength of the first network compared to the relative signal strength of the second network connection for the first communication device (100) or relative signal strength of the first network compared to the relative signal strength of the second network connection for the second communication device (102).

15. The communication system of claim 1, wherein the first handover module (100(a)) comprises a decision logic to handover communication connectivity from the first communication network to the second communication network based on degradation of a first quality of the first communication network or degradation of a second quality of the second communication network.

16. The communication system of claim 1, wherein the first handover module (100(a)) comprises a decision logic to handover communication connectivity from the first communication network to the second communication network based on comparative link statistics of the two networks.

17. The communication system of claim 1, wherein the first handover module (100(a)) comprises a decision logic to handover communication connectivity from the first communication network to the second communication network based on data transfer rate of one of the first and second communication networks.

18. The communication system of claim 1, wherein the first handover module (100(a)) comprises a decision logic to handover communication connectivity from the first communication network to the second communication network based on applications running on the first communication device (100) or applications running on the second communication device (102).

19. The communication system of claim 1, wherein the first handover module (100(a)) comprises a decision logic to handover communication connectivity from the first communication network to the second communication network based on preferences of the first communication device (100) or preferences of the second communication device (102).

20. The communication system of claim 1, wherein the first handover module (100(a)) comprises a decision logic to handover communication connectivity from the first communication network to the second communication network based on battery power of the first communication device (100) and the second communication device (102).

21. The communication system of claim 1, wherein the second communication device (102) is in communication with the first communication device (100) via a communication connectivity to a third communication network, wherein the second handover module (102(a)) is cooperatively operable with the first handover module (100(a)) to maintain communication between the second communication device (102) and the first communication device (100) while the first handover module (100(a)) operates to handover communication connectivity from the first communication network to the second communication network.

22. The communication system of claim 1, wherein one of the first and second handover modules (100(a), 102(a)) terminates the communication connectivity to the first communication network after the handover.

23. The communication system of claim 1, wherein one of the first and second handover modules (100(a), 102(a)) terminates the communication connectivity to the first communication network before the handover.

24. The communication system of claim 1, wherein:
the first communication device (100) is configured to, prior to initiating the handover of the communication connectivity from the first communication network to the second communication network, send a query to the second communication device (102) inquiring whether the second communication device (102) supports client-based multimode handover;
the second communication device (102) is configured to either (i) reply to the query with a message confirming that the second communication device supports client-based multimode handover or (ii) not reply to the query, wherein the first communication device (100) is configured to interpret a non-reply to the query as an indication that the second communication device is not capable of supporting client-based multimode handover.

25. A method performed by the communication system of claim 1, wherein:
the first communication device (100), prior to initiating the handover of the communication connectivity from the first communication network to the second communication network, sends identifying information of connectivity for its radio transceiver, network providers and/or service providers to the second communication device (102), the identifying information sent to the second communication device (102) including information identifying the first communication device's second communication network connection;
the first handover module (100(a)) initiates the handover of the communication connectivity from the first communication network to the second communication network by sending a message to the second handover module (102(a)) along with information identifying the first communication device's second communication network connection, wherein the second handover module (102(a)) recognizes that the message is from the first communication device (100) based on the previously sent information identifying the first communication device's second communication network connection and implements the handover by calling the first communication device (100) via the second communication network.

## Patentansprüche

1. Kommunikationssystem, umfassend:
eine erste Kommunikationsvorrichtung (100), die über eine Kommunikationskonnektivität zu einem ersten Kommunikationsnetzwerk in Kommunikation mit einer zweiten Kommunikationsvorrichtung (102) steht;
worin die erste Kommunikationsvorrichtung (100) ein erstes Übergabe-Modul (100(a)) aufweist, das eine Kommunikationskonnektivität vom ersten Kommunikationsnetzwerk an ein zweites Kommunikationsnetzwerk übergeben kann; und
worin die zweite Kommunikationsvorrichtung (102) ein zweites Übergabe-Modul (102(a)) aufweist, das zusammenwirkend mit dem ersten Übergabe-Modul (100(a)) betreibbar ist, um Kommunikation zwischen der zweiten Kommunikationsvorrichtung (102) und der ersten Kommunikationsvorrichtung (100) aufrechtzuerhalten, während das erste Übergabe-Modul (100(a)) arbeitet, um eine Kommunikationskonnektivität vom ersten Kommunikationsnetzwerk an das zweite Kommunikationsnetzwerk zu übergeben
**dadurch gekennzeichnet, dass** die erste Kommunikationsvorrichtung (100), vor dem Starten der Übergabe der Kommunikationskonnektivität vom ersten Kommunikationsnetzwerk an das zweite Kommunikationsnetzwerk, konfiguriert ist, identifizierende Konnektivitäts-Informationen für ihre Funk-Sendeempfänger, Netzbetreiber und/oder Serviceanbieter an die zweite Kommunikationsvorrichtung (102) zu senden, wobei die identifizierenden Informationen, die an die zweite Kommunikationsvorrichtung (102) gesandt werden, Informationen umfassen, die die zweite Kommunikationsnetzwerkverbindung der ersten Kommunikationsvorrichtung identifizieren;
worin das erste Übergabe-Modul (100(a)) konfiguriert ist, die Übergabe der Kommunikationskonnektivität vom ersten Kommunikationsnetzwerk an das zweite Kommunikationsnetzwerk durch das Senden einer Nachricht an das zweite Übergabe-Modul (102(a)) gemeinsam mit Informationen, die die zweite Kommunikationsnetzwerkverbindung der ersten Kommunikationsvorrichtung identifizieren, zu starten, worin das zweite Übergabe-Modul (102(a)) konfiguriert ist, zu erkennen, dass die Nachricht aus der ersten Kommunikationsvorrichtung (100) auf Basis der zuvor gesandten Informationen, die die zweite Kommunikationsnetzwerkverbindung der ersten Kommunikationsvorrichtung identifizieren, stammt, und die Übergabe durch Anrufen der ersten Kommunikationsvorrichtung (100) über das zweite Kommunikationsnetzwerk zu implementieren.

2. Kommunikationssystem nach Anspruch 1, worin die erste Kommunikationsvorrichtung (100) aus einer Gruppe ausgewählt ist, die aus mindestens einem eines Softphones auf einem Persönlichen-Rechner, eines Mobiltelefons, eines Session-Initiated-Protocol (SIP) -Telephons, eines Internet-Protokoll-Telefonie-(VoIP)-Telephons, einer Bluetooth-Vorrichtung, die zur Kommunikation mit einem Telephon aktiviert ist, eines Persönlichen-Digitalen-Assistenten, einer WiFi-aktivierten Telephon-Vorrichtung und eines Telephons, das mit einem Fernsprechnetz (PSTN) betrieben werden kann, besteht.

3. Kommunikationssystem nach Anspruch 1, worin die zweite Kommunikationsvorrichtung (102) aus einer Gruppe ausgewählt ist, die aus mindestens einem eines Softphones auf einem Persönlichen-Rechner, eines Mobiltelephons, eines Session-Initiation-Protocol (SIP) -Telephons, eines Internet-Protokoll-Telefonie (VoIP) -Telephons, einer Bluetooth-Vorrichtung, die zur Kommunikation mit einem Telephon aktiviert ist, eines Persönlichen-Digitalen-Assistenten, einer WiFi-aktivierten Telephon-Vorrichtung und eines herkömmlichen Fernsprechnetzes (PSTN) besteht.

4. Kommunikationssystem nach Anspruch 1, worin das erste und zweite Kommunikationsnetzwerk jeweils aus einer Gruppe von Netzwerken ausgewählt ist, die aus WiFi, Internet-Protokoll (IP), Codemehrfachzugriff (CDMA), Globalem Mobilkommunikationssystem (GSM), Internet-Protokoll-Telefonie (VoIP), Fernsprechnetz (PSTN), Worldwide-Interoperability-for-Microwave-Access (WiMAX), Langzeit-Evolution (LTE), Dritte-Generation (3G), GPRS, das über EDGE (EGPRS) betrieben wird, und jedem anderen paketvermittelten und/oder leitungsvermittelten Netzwerk bestehen.

5. Kommunikationssystem nach Anspruch 1, worin die Kommunikationskonnektivität zum ersten Kommunikationsnetz drahtlos ist.

6. Kommunikationssystem nach Anspruch 1, worin das zweite Übergabe-Modul (102(a)) programmiert ist, die erste Kommunikationsvorrichtung (100) bei Empfang der Nachricht, die die Übergabe von der ersten Kommunikationsvorrichtung (100) startet, automatisch anzurufen.

7. Kommunikationssystem nach Anspruch 1, worin die Nachricht über ein Protokoll übertragen wird, das aus einer Gruppe ausgewählt ist, die aus Kurznachrichtendienst (SMS), Sofortiger Nachrichtenübermittlung (EVI) und Session-Initiation-Protocol (SIP) besteht.

8. Kommunikationssystem nach Anspruch 1, worin die Nachricht Identitätsangaben der ersten Kommunikationsvorrichtung (100) umfasst, die durch das zweite Übergabe-Modul (102(a)) angewandt wird, um die erste Kommunikationsvorrichtung (100) auf ihre Richtigkeit zu überprüfen und die Übergabe von Kommunikationskonnektivität vom ersten Kommunikationsnetzwerk an das zweite Kommunikationsnetzwerk zu ermöglichen.

9. Kommunikationssystem nach Anspruch 8, worin die Identitätsangaben aus einer Gruppe ausgewählt sind, die aus Identifizierung des Anrufers, Angaben, die die erste Kommunikationsnetzwerkverbindung identifizieren, und Angaben, die die zweite Kommunikationsnetzwerkverbindung identifiziert, besteht.

10. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk, basierend auf Tageszeit oder Wochentag, zu übertragen.

11. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis eines Subskriptions-Plans der ersten Kommunikationsvorrichtung (100) oder eines Subskriptions-Plans der zweiten Kommunikationsvorrichtung (102) zu übergeben.

12. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis von den dem ersten Kommunikationsnetzwerk zugeordneten Kosten im Vergleich zu den dem zweiten Kommunikationsnetzwerk zugeordneten Kosten für die erste Kommunikationsvorrichtung (100), oder von den dem ersten Kommunikationsnetzwerk zugeordneten Kosten im Vergleich zu den dem zweiten Kommunikationsnetzwerk zugeordneten Kosten für die zweite Kommunikationsvorrichtung (102) zu übergeben.

13. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk, basierend auf Benutzer-Präferenzen für Kommunikationskonnektivität, zu übergeben.

14. Kommunikationssystem nach Anspruch 1, worin das erste Übergabe-Modul (100(a)) eine Entscheidungs-Logik umfasst, um Kommunikationskonnektivität vom ersten Kommunikationsnetzwerk an das zweite Kommunikationsnetzwerk auf Basis relativer Signalstärke des ersten Netzwerks im Vergleich zur relativen Signalstärke der zweiten Netzwerkverbindung für die erste Kommunikationsvorrichtung (100), oder der relativen Signalstärke des ersten Netzwerks im Vergleich zur relativen Signalstärke der zweiten Netzwerkverbindung für die zweite Kommunikationsvorrichtung (102) zu übergeben.

15. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis von Verschlechterung einer ersten Qualität des ersten Kommunikationsnetzwerks oder Verschlechterung einer zweiten Qualität des zweiten Kommunikationsnetzwerks zu übergeben.

16. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis von vergleichender Verbindungsstatistik der zwei Netzwerke zu übergeben.

17. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis einer Datenübertragungsrate von einem des ersten und zweiten Kommunikationsnetzwerks zu übergeben.

18. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis von Anwendungsprogrammen, die auf der ersten Kommunikationsvorrichtung (100), oder von Anwendungsprogrammen, die auf der zweiten Kommunikationsvorrichtung (102) laufen, zu übergeben.

19. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das Zweite Kommunikationsnetzwerk auf Basis von Präferenzen der ersten Kommunikationsvorrichtung (100) oder Präferenzen der zweiten Kommunikationsvorrichtung (102) zu übergeben.

20. Kommunikationssystem nach Anspruch 1, worin das erste Übergabe-Modul (100(a)) eine Entscheidungs-Logik umfasst, Kommunikationskonnektivität vom ersten Kommunikationsnetzwerk an das zweite Kommunikationsnetzwerk auf Basis von Batterieenergie der ersten Kommunikationsvorrichtung (100) und der zweiten Kommunikationsvorrichtung (102) zu übergeben.

21. Kommunikationssystem nach Anspruch 1, worin die zweite Kommunikationsvorrichtung (102) in Kommunikation mit der ersten Kommunikationsvorrichtung (100) über eine Kommunikationskonnektivität zu einem dritten Kommunikationsnetzwerk steht, worin das zweite Übergabe-Modul (102(a)) zusammenwirkend mit dem ersten Übergabe-Modul (100(a)) betreibbar ist, um Kommunikation zwischen der zweiten Kommunikationsvorrichtung (102) und der ersten Kommunikationsvorrichtung (100) aufrechtzuerhalten, während das erste Übergabe-Modul (100(a)) in Betrieb ist, Kommunikationskonnektivität vom ersten Kommunikationsnetzwerk an das zweite Kommunikationsnetzwerk zu übergeben.

22. Kommunikationssystem nach Anspruch 1, worin eines der ersten und zweiten Übergabe-Module (100(a), 102(a)) die Kommunikationskonnektivität zum ersten Kommunikationsnetzwerk nach der Übergabe beendet.

23. Kommunikationssystem nach Anspruch 1, worin eines der ersten und zweiten Übergabe-Module (100(a), 102(a)) die Kommunikationskonnektivität zum ersten Kommunikationsnetzwerk vor der Übergabe beendet.

24. Kommunikationssystem nach Anspruch 1, worin:
die erste Kommunikationsvorrichtung (100) konfiguriert ist, vordem Starten der Übergabe der Kommunikationskonnektivität vom ersten Kommunikationsnetzwerk an das zweite Kommunikationsnetzwerk, eine Anfrage an die zweite Kommunikationsvorrichtung (102) zu senden, um Erkundigungen dahingehend einzuziehen, ob die zweite Kommunikationsvorrichtung (102) eine Kunden-basierte Mehrmodus-Übergabe unterstützt;
die zweite Kommunikationsvorrichtung (102) konfiguriert ist, entweder (i) auf die Anfrage mit einer Nachricht zu antworten, die bestätigt, dass die zweite Kommunikationsvorrichtung eine Kunden-basierte Mehrmodus-Übergabe unterstützt oder (ii) nicht auf die Anfrage zu antworten, worin die erste Kommunikationsvorrichtung (100) konfiguriert ist, eine Nicht-Antwort auf die Anfrage als Anzeige dahingehend zu deuten, dass die zweite Kommunikationsvorrichtung nicht in der Lage ist, eine Kunden-basierte Mehrmodus-Übergabe zu unterstützen.

25. Verfahren, das durch das Kommunikationssystem nach Anspruch 1 ausgeführt wird, worin:
die erste Kommunikationsvorrichtung (100), vor dem Starten der Übergabe der Kommunikationskonnektivität vom ersten Kommunikationsnetzwerk an das zweite Kommunikationsnetzwerk, Identitätsangaben der Konnektivität für ihren Funk-Sendeempfänger, Netzbetreiber und/oder Serviceanbieter an die zweite Kommunikationsvorrichtung (102) sendet, wobei die an die zweite Kommunikationsvorrichtung (102) gesandten Identitätsangaben Angaben umfassen, die die zweite Kommunikationsnetzwerksverbindung der ersten Kommunikationsvorrichtung identifizieren;
das erste Übergabe-Modul (100(a)) die Übergabe der Kommunikationskonnektivität vom ersten Kommunikationsnetzwerk an das zweite Kommunikationsnetzwerk durch das Senden einer Nachricht an das zweite Übergabe-Modul (102(a)) gemeinsam mit Informationen, die die zweite Kommunikationsnetzwerkverbindung der ersten Kommunikationsvorrichtung identifizieren, startet, worin das zweite Übergabe-Modul (102(a)) erkennt, dass die Nachricht von der ersten Kommunikationsvorrichtung (100) auf Basis der zuvor gesandten Informationen, die die zweite Kommunikationsnetzwerkverbindung der ersten Kommunikationsvorrichtung identifizieren, stammt, und die Übergabe durch Anrufen der ersten Kommunikationsvorrichtung (100) über das zweite Kommunikationsnetzwerk implementiert.

## Revendications

1. Système de communication comprenant :
un premier dispositif de communication (100) en communication avec un second dispositif de communication (102) par l'intermédiaire d'une connectivité de communication à un premier réseau de communication ;
le premier dispositif de communication (100) présentant un premier module de transfert intercellulaire (100(a)) exploitable de manière à transférer de manière intercellulaire la connectivité de communication du premier réseau de communication à un deuxième réseau de communication ; et
le second dispositif de communication (102) présentant un second module de transfert intercellulaire (102(a)) en coopération fonctionnelle avec le premier module de transfert intercellulaire (100(a)) en vue de maintenir la communication entre le second dispositif de communication (102) et le premier dispositif de communication (100), tandis que le premier module de transfert intercellulaire (100(a)) opère pour transférer de manière intercellulaire la connectivité de communication du premier réseau de communication au deuxième réseau de communication ;
**caractérisé en ce que** le premier dispositif de communication (100) est configuré de manière à, avant d'initier le transfert intercellulaire de la connectivité de communication du premier réseau de communication au deuxième réseau de communication, envoyer des informations d'identification de connectivité, pour son émetteur-récepteur radio, ses fournisseurs de réseaux et/ou ses fournisseurs de services, au second dispositif de communication (102), les informations d'identification envoyées au second dispositif de communication (102) incluant des informations identifiant la seconde connexion de réseau de communication du premier dispositif de communication ;
dans lequel le premier module de transfert intercellulaire (100(a)) est configuré de manière à initier le transfert intercellulaire de la connectivité de communication, du premier réseau de communication au deuxième réseau de communication, en envoyant un message au second module de transfert intercellulaire (102(a)), ainsi que des informations identifiant la seconde connexion de réseau de communication du premier dispositif de communication, dans lequel le second module de transfert intercellulaire (102(a)) est configuré de manière à reconnaître que le message provient du premier dispositif de communication (100) sur la base des informations envoyées précédemment identifiant la seconde connexion de réseau de communication du premier dispositif de communication, et à mettre en oeuvre le transfert intercellulaire en appelant le premier dispositif de communication (100) par l'intermédiaire du deuxième réseau de communication.

2. Système de communication selon la revendication 1, dans lequel le premier dispositif de communication (100) est sélectionné à partir d'un groupe constitué par au moins l'un parmi un téléphone logiciel sur un ordinateur personnel, un téléphone cellulaire, un téléphone de protocole d'ouverture de session (SIP), un téléphone « voix sur protocole Internet » (VoIP), un dispositif Bluetooth activé pour communiquer avec un téléphone, un assistant numérique personnel, un dispositif téléphonique compatible WiFi, et un téléphone exploitable avec un réseau téléphonique public commuté (PSTN).

3. Système de communication selon la revendication 1, dans lequel le second dispositif de communication (102) est sélectionné à partir d'un groupe constitué par au moins l'un parmi un téléphone logiciel sur un ordinateur personnel, un téléphone cellulaire, un téléphone de protocole d'ouverture de session (SIP), un téléphone « voix sur protocole Internet » (VoIP), un dispositif Bluetooth activé pour communiquer avec un téléphone, un assistant numérique personnel, un dispositif téléphonique compatible WiFi, et un réseau téléphonique public commuté (PSTN) traditionnel.

4. Système de communication selon la revendication 1, dans lequel les premier et second réseaux de communication sont chacun sélectionnés à partir d'un groupe de réseaux constitués par un réseau WiFi, un réseau de protocole Internet (IP), un réseau d'accès multiple par répartition en code (CDMA), un réseau de système mondial de communication avec les mobiles (GSM), un réseau « voix sur protocole Internet » (VoIP), un réseau téléphonique public commuté (PSTN), un réseau à technologie d'interopérabilité mondiale pour l'accès hyperfréquence (WiMAX), un réseau à technologie d'évolution à long terme (LTE), un réseau de troisième génération (3G), un réseau de service GPRS à débit amélioré (EGPRS), et un quelconque autre réseau à commutation de paquets et/ou réseau à commutation de circuits.

5. Système de communication selon la revendication 1, dans lequel la connectivité de communication au premier réseau de communication est une connectivité sans fil.

6. Système de communication selon la revendication 1, dans lequel le second module de transfert intercellulaire (102(a)) est programmé de manière à appeler automatiquement le premier dispositif de communication (100) suite à la réception du message initiant le transfert intercellulaire à partir du premier dispositif de communication (100).

7. Système de communication selon la revendication 1, dans lequel le message est transmis par l'intermédiaire d'un protocole sélectionné à partir d'un groupe constitué par un protocole de service de messages courts (SMS), un protocole de messagerie instantanée (EVI) et un protocole d'ouverture de session (SIP).

8. Système de communication selon la revendication 1, dans lequel le message comporte des informations d'identité du premier dispositif de communication (100), utilisées par le second module de transfert intercellulaire (102(a)) pour vérifier le premier dispositif de communication (100) et permettre le transfert intercellulaire de connectivité de communication du premier réseau de communication au deuxième réseau de communication.

9. Système de communication selon la revendication 8, dans lequel les informations d'identité sont sélectionnées à partir d'un groupe constitué par des informations d'identification d'appelant, des informations identifiant la première connexion de réseau de communication, et des informations identifiant la seconde connexion de réseau de communication.

10. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base de l'heure du jour ou du jour de la semaine.

11. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base d'un plan d'abonnement du premier dispositif de communication (100) ou d'un plan d'abonnement du second dispositif de communication (102).

12. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base d'un coût associé au premier réseau de communication par rapport à un coût associé au deuxième réseau de communication pour le premier dispositif de communication (100), ou sur la base d'un coût associé au premier réseau de communication par rapport à un coût associé au deuxième réseau de communication pour le second dispositif de communication (102).

13. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base de préférences d'utilisateurs en ce qui concerne la connectivité de communication.

14. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base de l'intensité de signal relative du premier réseau par rapport à l'intensité de signal relative de la seconde connexion de réseau pour le premier dispositif de communication (100), ou sur la base de l'intensité de signal relative du premier réseau par rapport à l'intensité de signal relative de la seconde connexion de réseau pour le second dispositif de communication (102).

15. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base d'une dégradation d'une première qualité du premier réseau de communication ou d'une dégradation d'une seconde qualité du deuxième réseau de communication.

16. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base de statistiques de liaisons comparatives des deux réseaux.

17. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base d'un débit de transfert de données de l'un des premier et second réseaux de communication.

18. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base d'applications exécutées sur le premier dispositif de communication (100) ou d'applications exécutées sur le second dispositif de communication (102).

19. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base de préférences du premier dispositif de communication (100) ou de préférences du second dispositif de communication (102).

20. Système de communication selon la revendication 1, dans lequel le premier module de transfert intercellulaire (100(a)) comporte une logique de décision destinée à transférer de manière intercellulaire la connectivité de communication, du premier réseau de communication au deuxième réseau de communication, sur la base d'une puissance de batterie du premier dispositif de communication (100) et du second dispositif de communication (102).

21. Système de communication selon la revendication 1, dans lequel le second dispositif de communication (102) est en communication avec le premier dispositif de communication (100) par l'intermédiaire d'une connectivité de communication à un troisième réseau de communication, dans lequel le second module de transfert intercellulaire (102(a)) est en coopération fonctionnelle avec le premier module de transfert intercellulaire (100(a)) de manière à maintenir la communication entre le second dispositif de communication (102) et le premier dispositif de communication (100) tandis que le premier module de transfert intercellulaire (100 (a)) opère pour transférer de manière intercellulaire la connectivité de communication, du premier réseau de communication au deuxième réseau de communication.

22. Système de communication selon la revendication 1, dans lequel l'un des premier et second modules de transfert intercellulaire (100(a), 102(a)) met fin à la connectivité de communication au premier réseau de communication après le transfert intercellulaire.

23. Système de communication selon la revendication 1, dans lequel l'un des premier et second modules de transfert intercellulaire (100(a), 102(a)) met fin à la connectivité de communication au premier réseau de communication avant le transfert intercellulaire.

24. Système de communication selon la revendication 1, dans lequel :
le premier dispositif de communication (100) est configuré de manière à, avant d'initier le transfert intercellulaire de la connectivité de communication du premier réseau de communication au deuxième réseau de communication, envoyer une requête au second dispositif de communication (102) demandant si le second dispositif de communication (102) prend en charge un transfert intercellulaire multimode basé sur le dispositif client ;
le second dispositif de communication (102) est configuré de manière à, soit (i) répondre à la requête par un message confirmant que le second dispositif de communication prend en charge le transfert intercellulaire multimode basé sur le dispositif client, soit (ii) ne pas répondre à la requête, dans lequel le premier dispositif de communication (100) est configuré de manière à interpréter une absence de réponse à la requête comme une indication que le second dispositif de communication n'est pas en mesure de prendre en charge le transfert intercellulaire multimode basé sur le dispositif client.

25. Procédé mis en oeuvre par le système de communication selon la revendication 1, dans lequel :
le premier dispositif de communication (100), avant d'initier le transfert intercellulaire de la connectivité de communication du premier réseau de communication au deuxième réseau de communication, envoie des informations d'identification de connectivité pour son émetteur-récepteur radio, ses fournisseurs de réseaux et/ou ses fournisseurs de services, au second dispositif de communication (102), les informations d'identification envoyées au second dispositif de communication (102) incluant des informations identifiant la seconde connexion de réseau de communication du premier dispositif de communication ;
le premier module de transfert intercellulaire (100(a)) initie le transfert intercellulaire de la connectivité de communication, du premier réseau de communication au deuxième réseau de communication, en envoyant un message au second module de transfert intercellulaire (102(a)), ainsi que des informations identifiant la seconde connexion de réseau de communication du premier dispositif de communication, dans lequel le second module de transfert intercellulaire (102(a)) reconnaît que le message provient du premier dispositif de communication (100) sur la base des informations envoyées précédemment identifiant la seconde connexion de réseau de communication du premier dispositif de communication, et met en oeuvre le transfert intercellulaire en appelant le premier dispositif de communication (100) par l'intermédiaire du deuxième réseau de communication.
